# EUROPEAN PATENT SPECIFICATION

(11) **EP 1 347 409 B1**
(45) Date of publication and mention of the grant of the patent: **31.10.2007**
(21) Application number: 03251814.4
(22) Date of filing: 22.03.2003
(51) Int. Cl.: G06K 19/07

(54) **Electronic tag**
Elektronisches Etikett
Etiquette électronique

(30) Priority: 23.03.2002 GB 0206905
(43) Date of publication of application: 24.09.2003
(73) Proprietor: Oxley Developments Company Limited, Ulverston Cumbria LA12 9QG (GB)
(72) Inventor: Latham, Dr Christopher Brian Taylor, Cumbria LA11 6JQ (GB); Norrie, David Richard, Ulverston, Cumbria LA12 ODS (GB)
(74) Representative: W.P. Thompson & Co.

(56) References cited:
- EP-A- 0 563 713
- EP-A- 1 022 702
- WO-A-94/14133
- WO-A-98/58238
- GB-A- 2 308 947
- US-A- 4 160 234

## Description

the present invention relates to developments in electronic tag technology.

Compact electronic data modules, or electronic "tags", are in themselves well known and take a wide variety of forms. Some means of obtaining and/or storing information is required along with an electronic means for interfacing with a separate reader. Some tags are used simply to store an identifying code. Others have read/writeable memory and to avoid a need for constant power supply, and the danger of loss of information in the event of interruption of the power supply, such memories are preferably non-volatile (ie. capable of retaining information even when not energized by any supply). Some tags are adapted to be interrogated through a "wand" which makes direct electrical contact when offered up to the tag. Others are provided with a radio frequency (RF) interface.

While the data stored on a tag may be written to it through such an interface, a type of tag of particular interest for present purposes receives information from some other source, for example a transducer (which may be part of the tag) measuring some physical parameter such as temperature. This may be additional to the facility to write data to the tag through the interface.

Reading and writing information from/to the tag requires electrical power. Many tags have an on board battery to supply this and the tag is thereby enabled to operate almost autonomously, recording sensed events as data in memory and requiring interaction with an external reading device only for retrieval of this data. However incorporation of a battery adds to the bulk of the tag and makes periodic recharging or replacement necessary. Furthermore use of batteries is prohibited in certain contexts, e.g. in connection with explosives. The applicant's published European Patent Application 00302679.6 (publication No. 1041516) discloses a tag which is to be electrically connected to a host electrical apparatus in order to record data such as the total time for which the host is operational. This tag thus requires no on board power supply and is powered up only when the host supply is turned on, or when interrogated by means of a wand which, through contact with electrodes on the tag, both supplies power to and exchanges information with the tag. While useful in the right context, the tag is clearly not suitable e.g.. for use in tagging an item lacking its own electrical supply.

The several aspects of the present invention are addressed to problems in powering electronic tags.

WO98/58238 (Stella S.A.; Fallah, Michel) describes an electronic label having means for detecting at least one physical variable related to the storage, preservation or packaging of a product. The detecting means produce an irreversible, non-volatile storage of the physical variable or of a threshold value of the variable, even in the absence of an electric power supply source.

US 4160234 describes a self powered tyre condition, indicator system in which a piezo electric transducer mounted in a tyre is repeatedly stimulated virtue of rotation of the tyre, and serves to drive a radio transmitter.

In accordance with a first aspect of the present invention there is an electronic tag comprising electronic circuitry incorporating a microprocessor, a non-volatile memory associated with the microprocessor such that the microprocessor can write data to the non-volatile memory, a sensing transducer connected to the microprocessor, and an interface for interrogation of the non-volatile memory, the sensing transducer being such as to output an electrical signal in response to an event of a pre-selected type, characterised in that the microprocessor is programmed and arranged to be powered by the electrical signal from the sensing transducer while logging the electrical signal to the non-volatile memory to produce a record of the selected event.

A tag is thus provided which need not include a battery and which can log events detected by the transducer.

By using energy obtained through the transducer by reason of the event to create the required record of it, the need for an onboard power supply can again be avoided.

The event in question is typically some form of mechanical action on the tag.

In the most preferred embodiment of this aspect of the invention the transducer is of piezo-electric type. A piezo-electric transducer emits an electrical signal in response to a transient applied force. Such a tag is most preferably adapted to monitor mechanical shock levels, which a piezo-electric transducer is well suited to. It may for example be adapted to log the greatest shock to which a host item is subject, for warranty purposes or to ensure proper treatment during transportation.

Preferably the tag further comprises a capacitor connected to the sensing transducer such as to be charged by the electrical output signal, the capacitor also being connected to the microprocessor so that subsequent discharge of the capacitor powers the microprocessor.

Hence energy acquired from the transducer can be stored to run the tag for a period of time.

Preferably the interface is a wireless interface.

It is particularly preferred that the wireless interface is arranged to supply electrical power to the microprocessor enabling the microprocessor to be driven by energy received through the interface from an interrogating electromagnetic field.

In a preferred embodiment the microprocessor is arranged to be powered by the electrical output signal from the sensing transducer in carrying out logging and to be powered from the interface during interrogation of the non-volatile memory through the interface.

In a further preferred embodiment the microprocessor is arranged to log an indication of the strength of the electrical signal from the sensing transducer. Still more preferably the microprocessor is programmed to log an indication of the strongest signal received from the sensing transducer.

In yet a further preferred embodiment the microprocessor is arranged to measure time and to log the time of events. This may be achieved by arranging that the microprocessor is connected to a capacitor such as to measure capacitor potential and to interpret capacitor potential as an indication of time.

In a particularly preferred embodiment, the tag is adapted to monitor or to log capacitor potential. The decay of charge on the capacitor can be used as an indication of elapsed time. Hence in one such embodiment the tag is adapted to log capacitor potential or some variable related thereto along with a sensor reading. In this way the elapsed time when the sensor reading is taken can be obtained on subsequent interrogation of the tag. Such a tag could provide a simple way to monitor whether, for example, the shelf life of a food item had been exceeded.

In a further preferred embodiment the sensor is a temperature sensor. Such a tag may be used to monitor the temperature profile of food, for example. It could be attached to a frozen food item or consignment and adapted to log any occasion when the measured temperature fell outside a chosen range, to provide assurance of proper storage conditions. It could alternatively be adapted to make a periodic log to provide a temperature/time profile.

Preferably the capacitor is arranged to be charged through the interface during interrogation of the tag. One such embodiment of the invention has an interface having electrical terminals for contact with an interrogation device, the capacitor being connected to the terminals such as to receive current from the interrogation device. Another such device, embodying the present invention, has a wireless interface and is adapted to supply energy received from an interrogating wireless field to charge the capacitor.

Tags according to the present invention may be for logging any one or more of the following physical properties:-
I. mechanical shock or vibration;
ii. temperature;
iii voltage;
iv current;
obtained on subsequent interrogation of the tag. Such a tag could provide a simple way to monitor whether, for example, the shelf life of a food item had been exceeded.

In a further preferred embodiment the sensor is a temperature sensor. Such a tag may be used to monitor the temperature profile of food, for example. It could be attached to a frozen food item or consignment and adapted to log any occasion when the measured temperature fell outside a chosen range, to provide assurance of proper storage conditions. It could alternatively be adapted to make a periodic log to provide a temperature/time profile.

Preferably the capacitor is arranged to be charged through the interface during interrogation of the tag. One such embodiment of the invention has an interface having electrical terminals for contact with an interrogation device, the capacitor being connected to the terminals such as to receive current from the interrogation device. Another such device, embodying the present invention, has a wireless interface and is adapted to supply energy received from an interrogating wireless field to charge the capacitor.

In accordance with a fourth aspect of the present invention, there is an electronic tag comprising electronic circuitry incorporating a transducer, a non-volatile memory, a control, and an interface through which the tag can be interrogated, wherein the transducer is such as to output an electrical signal in response to an event of a preselected type and is connected to the control such that the electrical signal produced in response to the event powers the control in logging the signal to the memory, thereby providing a record of the event.

By using energy obtained through the transducer by reason of the event to create the required record of it, the need for an onboard power supply can again be avoided.

The event in question is typically some form of mechanical action on the tag.

In the most preferred embodiment of this aspect of the invention the transducer is of piezo-electric type. A piezo-electric transducer emits an electrical signal in response to a transient applied force. Such a tag is most preferably adapted to monitor mechanical shock levels, which a piezo-electric transducer is well suited to. It may for example be adapted to log the greatest shock to which a host item is subject, for warranty purposes or to ensure proper treatment during transportation.

The control may comprise a microprocessor.

In a further preferred embodiment, the electronic circuitry further incorporates a capacitor dischargeable through the circuitry to thereby drive same. The capacitor may be arranged to be charged by the transducer when subject to an event of the selected type. It may additionally or alternatively be arranged to be charged through the interface during interrogation of the tag.

In accordance with a fifth aspect of the present invention, there is an electronic tag comprising electronic circuitry incorporating an interface through which the tag can be interrogated, and means for inductively coupling to an AC power line to thereby supply electrical power to the circuitry.

In this way the tag can be powered from a host supply without the need for direct electrical connection to it.

Preferably the tag further comprises a memory and control electronics enabling copying of data to the memory and exchange of data through the interface.

In any of the second, third, fourth and fifth above mentioned aspects of the present invention, the control may be provided in the form of a microprocessor. The memory and control can be formed by a single integrated circuit, examples of which are commercially available.

Tags according to all aspects of the present invention may be for logging any one or more of the following physical properties:-
I. mechanical shock or vibration;
ii. temperature;
iii voltage;
iv current;
v humidity;
vi position;
vii orientation.

Specific embodiments of the present invention will now be described, by way of example only, with reference to the accompanying drawings in which:-
Fig. 1 is a circuit diagram of a first tag embodying the invention; and
Fig. 2 is a further circuit diagram of a second tag embodying the invention.

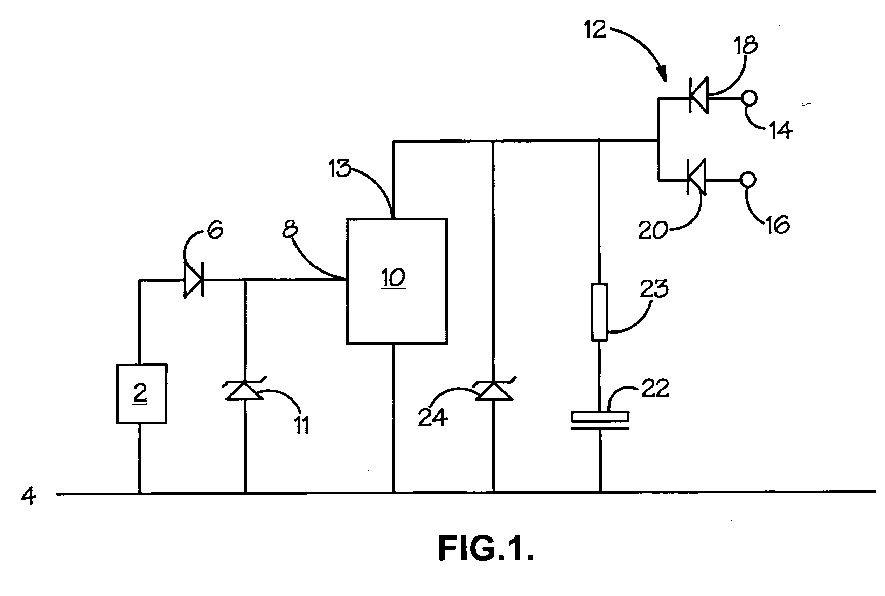

In the circuit of Fig. 1, a piezo-electric transducer 2 is connected on one side to a common line 4 and on its other side via a diode 6 to an input configured pin 8 of a microprocessor 10. A zener diode 11 connected between the input pin 8 and the common line 4 provides protection for the microprocessor against excess voltage from the transducer 2. A further pin 13 of the microprocessor is connected to an interface 12 which in this embodiment comprises simply a pair of contacts 14, 16 each with an associated diode 18, 20. The present tag is thus adapted to be interrogated using a "wand" having contacts which are brought into abutment with the contacts 14, 16 to both read/write tag data and supply power to the tag. Connected between the interface and the common line 4 is a capacitor 22 of the special type referred to above, having a long discharge time (a so-called "supercap"), in series with a resistor 23. The capacitor is charged from the wand during interrogation and its subsequent discharge provides power to the tag to carry out periodic data logging. Hence the tag can be powered in any of three different ways:-
I during interrogation, from the wand;
ii by the capacitor 22; or
iii transiently by the piezo-electric transducer 2.

Protection against excess voltage applied through the interface is provided by means of a second zener diode 24. The microprocessor 10 provides both the control function for the tag and its (non-volatile) memory. The tag serves to record shocks or vibrations, representative signals from the transducer 2 being logged by the microprocessor 10.

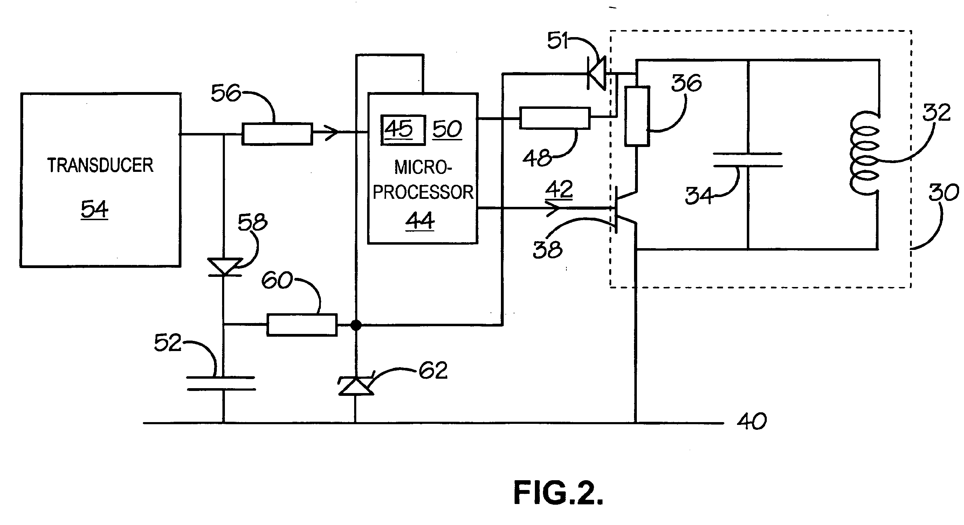

Whereas the embodiment illustrated in Fig. 1 is to be interrogated by means of direct electrical contacts, the Fig. 2 embodiment utilizes a wireless interface, the components of which are seen in dashed box 30. In the illustrated embodiment this is a radio interface. The operating frequency for a particular application of the tag is chosen with particular reference to official regulations but is typically above 100 kHz. Available frequencies in the UK include 134 kHz and 13.56 MHZ. Another factor affecting the choice of frequency is the aerial, which is typically incorporated within the tag itself so that its dimensions are limited. A printed band antenna can be used above 100 kHz and is suited to a compact tag. Nonetheless lower frequencies could be used in certain embodiments.

The radio interface 30 comprises a tuned circuit formed by a parallel combination of an inductor 32 and a capacitor 34. Also connected across these components is a series combination of a limiter resistor 36 and a switching transistor 38, the latter-being led to a common rail-40. the switching transistor 38 is controlled by an output 42 from a microprocessor 44. To output data through the interface a suitably modulated signal is applied by the microprocessor through output 42 to drive the transistor 38 and hence the tuned circuit. Signals received by the interface are led through a resistor 48 to an input 50 of the microprocessor. Additionally the tuned circuit is connected through a diode 51 to a high side of a power supply capacitor 52, connected on its opposite side to the common rail 40, and in this way energy received from an interrogating radio field is used to replenish charge on the capacitor 52.

In Fig. 2 a box 54 represents a transducer. A wide range of physical parameters can be monitored by tags embodying the present invention but in the illustrated example the transducer is of piezo-electric type and is used to monitor physical shocks to which a piece of equipment (on which the tag is mounted) is subject. Hence e.g. inappropriate handling of equipment in transit can be recorded.

The transducer produces an electrical output signal representative of the monitored physical parameter and this is led via a resistor 56 to an input of the microprocessor 44. In addition the output of the transducer is connected through a diode 58 to the power supply capacitor 52 so that energy received from the transducer replenishes the capacitor's charge. Time decay of the capacitor charge may be used as a measure of elapsed time.

The capacitor supplies a very small electrical power to the microprocessor through a resistor 60 which is additionally connectable to the common rail through a zener diode 62 to protect the microprocessor from excess voltage.

The microprocessor has an on-board non volatile memory 45 and stores operating software as well as having capacity to store data received from the transducer 54 and in some embodiments also data received through the interface 30.

The transducer 54 may be temperature sensitive. There are many applications for a temperature sensing tag. The microprocessor 44 can, using power from the capacitor 52, run a real time clock and carry out periodic logging of the monitored physical parameter. Hence for example a temperature profile over time can be recorded which is useful e.g. for monitoring the treatment of foodstuffs. Time decay of the capacitor charge may be used as a measure of elapsed time.

The example illustrated in Fig. 2 uses energy from both the interface 30 and the transducer 54, stored in the capacitor 52, to power the tag. However any of these three sources, individually or in any combination, could be used for power. For example the capacitor could be dispensed with, or have a relatively small capacitance, in a tag which was to be powered up only in response to a signal from its transducer or its interface.

The microprocessor 44 can be an off the shelf programmable controller with suitable control software stored in a flash memory. Suitable controllers will be known to those skilled in this field but include the AVR from Atmel and the MPS 430 from Texas Instruments.

## Claims

1. An electronic tag comprising electronic circuitry incorporating a microprocessor (10, 44), a non-volatile memory associated with the microprocessor (10, 44) such that the microprocessor (10, 44) can write data to the non-volatile memory, a sensing transducer (2, 54) connected to the microprocessor (10, 44), and an interface (14, 16, 30) for interrogation of the non-volatile memory, the sensing transducer (2, 54) being such as to output an electrical signal in response to an event of a pre-selected type, **characterised in that** the microprocessor (10, 44) is programmed and arranged to be powered by the electrical signal from the sensing transducer (54) while logging the electrical signal to the non-volatile memory to produce a record of the selected event.

2. An electronic tag as claimed in claim 1 further comprising a capacitor (52) connected to the sensing transducer (54) such as to be charged by the electrical output signal, the capacitor (52) also being connected to the microprocessor (44) so that subsequent discharge of the capacitor (52) powers the microprocessor (44).

3. An electronic tag as claimed in claim 1 or claim 2 wherein the interface is a wireless interface (30).

4. An electronic tag as claimed in any preceding claim wherein the interface (30) comprises a tuned circuit connected in parallel with a switching transistor (38), the transistor (38) being connected to an output of the microprocessor (44) whereby during interrogation of the tag a signal in the tuned circuit is modulated under the control of the microprocessor (44).

5. An electronic tag as claimed in claim 3 or claim 4 wherein the wireless interface (30) is arranged to supply electrical power to the microprocessor (44) enabling the microprocessor (44) to be driven by energy received through the interface (30) from an interrogating electromagnetic field.

6. An electronic tag as claimed in any preceding claim wherein the microprocessor (10, 44) is arranged to be powered by the electrical output signal from the sensing transducer (2, 54) in carrying out logging and to be powered from the interface during interrogation of the non-volatile memory through the interface (14, 16, 30).

7. An electronic tag as claimed in any preceding claim which is adapted to log physical shocks to which the tag is subject.

8. An electronic tag as claimed in any preceding claim wherein the microprocessor (10, 44) is arranged to log an indication of the strength of the electrical signal from the sensing transducer (2, 54).

9. An electronic tag as claimed in any preceding claim wherein the microprocessor (10, 44) is programmed to log an indication of the strongest signal received from the sensing transducer (2, 54).

10. An electronic tag as claimed in any preceding claim wherein the microprocessor (10, 44) is arranged to measure time and to log the time of events.

11. An electronic tag as claimed in any preceding claim wherein the microprocessor (10, 44) is connected to a capacitor (22, 52) such as to measure capacitor potential and to interpret capacitor potential as an indication of time.

12. An electronic tag as claimed in any of claims 1, 2, 6, 7, 8, 9, 10 or 11, wherein the interface (30) comprises electrical contacts (14,16) connected to the microprocessor (10) and contactable by means of a separate reader for interrogation of the tag.

13. An electronic tag as claimed in any preceding claim wherein the transducer (10, 54) is a piezoelectric transducer.

## Patentansprüche

1. Elektronisches Etikett, das Folgendes umfasst: einen elektronischen Schaltkomplex mit einem Mikroprozessor (10, 44), einen nichtflüchtigen Speicher, der mit dem Mikroprozessor (10, 44) assoziiert ist, so dass der Mikroprozessor (10, 44) Daten auf den nichtflüchtigen Speicher schreiben kann, einen mit dem Mikroprozessor (10, 44) verbundenen Messwandler (2, 54) und eine Schnittstelle (14, 16, 30) zum Abfragen des nichtflüchtigen Speicher, wobei der Messwandler (2, 54) so ausgelegt ist, dass er ein elektrisches Signal als Reaktion auf ein Event eines vorgewählten Typs ausgibt, **dadurch gekennzeichnet, dass** der Mikroprozessor (10, 44) so programmiert und ausgelegt ist, dass er vom elektrischen Signal von dem Messwandler (54) gespeist wird, während er das elektrische Signal auf dem nichtflüchtigen Speicher aufzeichnet, um einen Datensatz des gewählten Events zu erzeugen.

2. Elektronisches Etikett nach Anspruch 1, das ferner einen Kondensator (52) umfasst, der mit dem Messwandler (54) verbunden ist, so dass er von dem elektrischen Ausgangssignal geladen wird, wobei der Kondensator (52) auch mit dem Mikroprozessor (44) verbunden ist, so dass ein nachfolgendes Entladen des Kondensators (52) den Mikroprozessor (44) speist.

3. Elektronisches Etikett nach Anspruch 1 oder Anspruch 2, wobei die Schnittstelle eine drahtlose Schnittstelle (30) ist.

4. Elektronisches Etikett nach einem der vorherigen Ansprüche, wobei die Schnittstelle (30) einen abgestimmten Kreis aufweist, der parallel zu einem Schalttransistor (38) geschaltet ist, der mit einem Ausgang des Mikroprozessors (44) verbunden ist, so dass beim Abfragen des Etiketts ein Signal in dem abgestimmten Kreis unter der Steuerung des Mikroprozessors (44) moduliert wird.

5. Elektronisches Etikett nach Anspruch 3 oder Anspruch 4, wobei die drahtlose Schnittstelle (30) die Aufgabe hat, den Mikroprozessor (44) mit elektrischem Strom zu versorgen, damit der Mikroprozessor (44) mit Energie betrieben werden kann, die durch die Schnittstelle (30) von einem abfragenden elektromagnetischen Feld empfangen wird.

6. Elektronisches Etikett nach einem der vorherigen Ansprüche, wobei der Mikroprozessor (10, 44) so ausgelegt ist, dass er beim Aufzeichnen vom elektrischen Ausgangssignal vom Messwandler (2, 54) und beim Abfragen des nichtflüchtigen Speichers durch die Schnittstelle (14, 16, 30) von der Schnittstelle gespeist wird.

7. Elektronisches Etikett nach einem der vorherigen Ansprüche mit der Aufgabe, physikalische Stöße aufzuzeichnen, die das Etikett erfahrt.

8. Elektronisches Etikett nach einem der vorherigen Ansprüche, wobei der Mikroprozessor (10, 44) die Aufgabe hat, eine Anzeige der Stärke des elektrischen Signals von dem Messwandler (2, 54) aufzuzeichnen.

9. Elektronisches Etikett nach einem der vorherigen Ansprüche, wobei der Mikroprozessor (10, 44) so programmiert ist, dass er eine Anzeige des stärksten von dem Messwandler (2, 54) empfangenen Signals aufzeichnet.

10. Elektronisches Etikett nach einem der vorherigen Ansprüche, wobei der Mikroprozessor (10, 44) die Aufgabe hat, Zeit zu messen und die Zeit von Events aufzuzeichnen.

11. Elektronisches Etikett nach einem der vorherigen Ansprüche, wobei der Mikroprozessor (10, 44) mit einem Kondensator (22, 52) verbunden ist, so dass er Kondensatorpotenzial misst und Kondensatorpotenzial als eine Anzeige von Zeit interprätiert.

12. Elektronisches Etikett nach einem der Ansprüche 1, 2, 6, 7, 8, 9, 10 oder 11, wobei die Schnittstelle (30) elektrische Kontakte (14, 16) umfasst, die mit dem Mikroprozessor (10) verbunden und über einen separaten Leser zum Abfragen des Etiketts kontaktierbar sind.

13. Elektronisches Etikett nach einem der vorherigen Ansprüche, wobei der Wandler (10, 54) ein piezoelektrischer Wandler ist.

## Revendications

1. Une étiquette électronique comprenant des circuits électroniques contenant un microprocesseur (10, 44), une mémoire non volatile associée au microprocesseur (10, 44), de sorte que le microprocesseur (10, 44) puisse écrire des données dans la mémoire non volatile, un transducteur de détection (2, 54) connecté au microprocesseur (10, 44) et une interface (14, 16, 30) destinée à interroger la mémoire non volatile, le transducteur de détection (2, 54) étant capable de produire un signal électrique en réponse à un événement d'un type présélectionné, **caractérisée en ce que** le microprocesseur (10, 44) est programmé et agencé de façon à être alimenté par le signal électrique provenant du transducteur de détection (54) tout en enregistrant le signal électrique dans la mémoire non volatile pour produire un enregistrement de l'événement sélectionné.

2. Une étiquette électronique selon la Revendication 1 comprenant en outre un condensateur (52) connecté au transducteur de détection (54) de façon à être chargé par le signal de sortie électrique, le condensateur (52) étant également connecté au microprocesseur (44) de façon que la décharge subséquente du condensateur (52) alimente électriquement le microprocesseur (44).

3. Une étiquette électronique selon la Revendication 1 ou 2 où l'interface est une interface sans fil (30).

4. Une étiquette électronique selon l'une quelconque des Revendications précédentes où l'interface (30) comprend un circuit accordé connecté en parallèle à un transistor de commutation (38), le transistor (38) étant connecté à une sortie du microprocesseur (44), ce par quoi, au cours de l'interrogation de l'étiquette, un signal dans le circuit accordé est modulé sous le contrôle du microprocesseur (44).

5. Une étiquette électronique selon la Revendication 3 ou 4 où l'interface sans fil (30) est agencée de façon à fournir du courant électrique au microprocesseur (44) permettant au microprocesseur (44) d'être actionné par de l'énergie reçue par l'intermédiaire de l'interface (30) provenant d'un champ électromagnétique d'interrogation.

6. Une étiquette électronique selon l'une quelconque des Revendications précédentes où le microprocesseur (10, 44) est agencée de façon à être alimenté par le signal de sortie électrique provenant du transducteur de détection (2, 54) lorsqu'il exécute l'opération d'enregistrement et de façon à être alimenté à partir de l'interface au cours de l'interrogation de la mémoire non volatile par l'intermédiaire de l'interface (14, 16, 30).

7. Une étiquette électronique selon l'une quelconque des Revendications précédentes qui est adaptée de façon à enregistrer des chocs physiques auxquels l'étiquette est soumise.

8. Une étiquette électronique selon l'une quelconque des Revendications précédentes où le microprocesseur (10, 44) est agencée de façon à enregistrer une indication de la puissance du signal électrique provenant du transducteur de détection (2, 54).

9. Une étiquette électronique selon l'une quelconque des Revendications précédentes où le microprocesseur (10, 44) est programmé de façon à enregistrer une indication du signal le plus fort reçu du transducteur de détection (2, 54).

10. Une étiquette électronique selon l'une quelconque des Revendications précédentes où le microprocesseur (10, 44) est agencée de façon à mesurer l'heure et à enregistrer l'heure d'événements.

11. Une étiquette électronique selon l'une quelconque des Revendications précédentes où le microprocesseur (10, 44) est connecté à un condensateur (22, 52) de façon à mesurer le potentiel du condensateur et à interpréter le potentiel du condensateur comme étant une indication de l'heure.

12. Une étiquette électronique selon l'une quelconque des Revendications 1, 2, 6, 7, 8, 9, 10 ou 11, où l'interface (30) comprend des contacts électriques (14,16) connectés au microprocesseur (10) et contactables au moyen d'un lecteur séparé destiné à interroger l'étiquette.

13. Une étiquette électronique selon l'une quelconque des Revendications précédentes où le transducteur (10, 54) est un transducteur piézoélectrique.
